# EUROPEAN PATENT APPLICATION

(11) **EP 2 519 060 A1**
(43) Date of publication of application: **31.10.2012**
(21) Application number: 11360015.9
(22) Date of filing: 28.04.2011
(51) Int. Cl.: H04W 52/02

(54) **Power saving mode adjustment**

(71) Applicant: Alcatel Lucent, 75007 Paris (FR)
(72) Inventor: Hou, Jindong, Westlea Swindon Wiltshire SN5 7BL (GB); Wong, Shin Horng, Chippenham Wiltshire SN14 0SP (GB)
(74) Representative: Script IP Limited

(57) **Abstract**

A method of adjusting a power saving mode of user equipment operating in a wireless communication network, a computer program product and base station operable to perform that method. The power saving mode comprises a discontinuous reception and/or transmission mode according to which user equipment periodically switches, according to a first predetermined scheme, between a first state in which data packets may be communicated between the user equipment and the network and a second state in which data packets cannot be communicated between the user equipment and the network. The method comprises: determining that there is data traffic to be communicated between the user equipment and the network; assessing whether the data traffic can be communicated within the first predetermined scheme in accordance with at least one predetermined efficiency target; and if not: adjusting at least one operational parameter of the first predetermined scheme to move communication of the data traffic between the user equipment and the network towards the at least one predetermined efficiency target. Accordingly, a flexible discontinuous communication scheme may enhance power saving performance for smartphones, thus offering better operator service and better customer experience.

## Description

### FIELD OF THE INVENTION

The present invention relates to a method of adjusting a power saving mode of user equipment, a computer program product and base station operable to perform that method.

### BACKGROUND

Wireless telecommunications networks are known. In a cellular system, radio coverage is provided by area. Those areas of radio coverage are known as cells. A base station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

There are various radio states in which user equipment may operate in a UMTS telecommunications network. On initial turning on of user equipment in a cell, it will typically be in "idle mode". Once it synchronises and attaches itself to a base station, it gains a radio resource control (RRC) connection and is referred to as being in connected mode. User equipment in idle mode does not have a Radio Resource Control (RRC) connection.

If user equipment is RRC connected, it can typically be in one of five different RRC states: Cell_DCH, Cell_FACH, Enhanced Cell_FACH, Cell_PCH or URA_PCH.

User equipment typically moves into Cell_DCH state when its data traffic is high, since in such a state the user equipment is allocated a dedicated channel on which to transmit and receive data from base station. In UMTS network architecture, user equipment can be in Cell_DCH state, where it is expected to have high volume of data traffic.

Allowing user equipment to temporarily send and receive data traffic in a non Cell_DCH state, for example, whilst user equipment is in Cell_FACH or enhanced Cell_FACH states, can offer a power saving compared to constant Cell_DCH state use, since no dedicated signalling is required. As a result, user equipment may be able to function with a proportion of down time, rather than being in a dedicated signalling state and thus is able to use less power. Use of non Cell_DCH states for communication within a communication network can thus offer some power saving but is not without implementation difficulties.

It is desired to provide a wireless telecommunications network offering improved power efficiency.

### SUMMARY

A first aspect provides a method of adjusting a power saving mode of user equipment operating in a wireless communication network, the power saving mode comprising a discontinuous reception and/or transmission mode according to which the user equipment periodically switches, according to a first predetermined scheme, between a first state in which data packets may be communicated between the user equipment and the network and a second state in which data packets cannot be communicated between the user equipment and the network,
the method comprising the steps of:
determining that there is data traffic to be communicated between the user equipment and the network;
assessing whether the data traffic can be communicated within the first predetermined scheme in accordance with at least one predetermined efficiency target; and if not: adjusting at least one operational parameter of the first predetermined scheme to move communication of the data traffic between the user equipment and the network towards the at least one predetermined efficiency target.

User equipment may operate in various modes in, for example, a UMTS telecommunications network. On initial turning on of user equipment in a cell, it will typically be in "idle mode". Once it synchronises and attaches itself to a base station , it gains a radio resource control (RRC) connection and is referred to as being in connected mode. User equipment in idle mode does not have a Radio Resource Control (RRC) connection. If user equipment is RRC connected, it can be in one of five different RRC states: Cell_DCH, Cell_FACH, Enhanced Cell_FACH, Cell_PCH or URA_PCH states.

User equipment typically moves into Cell_DCH state when its traffic is high, since in such a state the user equipment is allocated a dedicated channel on which to transmit and receive data from base station. In UMTS network architecture, user equipment can be in Cell_DCH state, where it is expected to have high volume of traffic. Operation in a Cell_DCH state is typically demanding of battery power.

Historically user equipment operated, when not in Cell_DCH state, using a Random Access Channel (RACH) on the uplink and a base station would operate to communicate with user equipment using a Forward Access Channel (FACH). RACH and FACH had a very small data carrying ability and in W-CDMA or UMTS systems a capability for user equipment and base stations to operate and communicate data traffic therebetween using a shared or common resource on downlink and uplink when user equipment is in CELL_FACH state has been introduced via Enhanced CELL_FACH and EUL in CELL_FACH. In the uplink the data traffic transmission occurs using an Enhanced Dedicated Channel (EDCH) and in the downlink traffic is sent on a High Speed Downlink Shared Channel (HS-DSCH). Those channels allow user equipment and base stations to communicate and transmit larger data packets between themselves for a time, without the need for user equipment to enter Cell_DCH state. Such an arrangement allows user equipment to remain in the Cell_FACH state longer without transiting to "more dedicated" states, thus allowing a power consumption saving. It will be appreciated that data traffic may be particularly bursty in nature, for example, demand may be high whilst user equipment loads a website page, but then substantially zero whilst a user reads that website. Operation in full Cell_DCH state for such bursty traffic can be particularly wasteful of battery and thus the ability to handle bursty traffic without entering a more dedicated state is beneficial.

Network nodes, for example, user equipment, can operate according to a discontinuous transmission and/or reception regime in which they are dormant for a period of time, and can shut down their transmission and/or reception capability, and awaken to communicate with the network periodically and regularly in predetermined cycles. An example of such a regime is the HS-DSCH DRx (Discontinuous Receive) capability introduced for use by user equipment in CELL_FACH states allows user equipment to achieve further operational power savings.

The deployment of these enhanced features to, for example, user equipment operating in the Cell_FACH state, can allow "always on" type services, for example, Push to talk over cellular (PoC), Push email and VPN connections, which transmit frequent but small packets between the UE and server, to be supported in CELL_FACH state without the need to enter the CELL_DCH state.

In a typical discontinuous reception mode implemented by user equipment, for example, eDRX (Enhanced HSDPA Discontinuous Reception in CELL_FACH state), a base station or RNC operates to instruct the user equipment regarding the parameters of the discontinuous reception mode to be implemented. The parameters which describe the nature of the reception pattern include, for example, an indication of a time period, or number of system frames, for which user equipment is to remain "on" and an indication of a time period between "on" periods. It will be appreciated that a discontinuous reception cycle may equally be specified in relation to an "off" period and a time delay between "off" periods.

In a typical discontinuous reception mode, the "Rx burst period" (indicative of "on" period) and "DRX cycle" (indicative of delay between "on" periods) are fixed, or static. That is to say, once user equipment has been instructed to enter a discontinuous reception mode, the nature of that discontinuous reception mode is essentially static and does not adapt to accommodate any actual data traffic which is to be communicated between a base station and the user equipment when the user equipment is "on". That is to say, a statically implemented discontinuous reception regime takes no account of either: actual data transfer time needed or dynamic traffic pattern. A static pattern may cause unwanted power waste, for example, user equipment may remain "on" for longer than required, thus resulting in a less satisfactory eDRX performance in relation to user equipment, for example, smartphone, battery life. Implementation of a fixed DRX cycle having, for example, a fixed Rx burst period may, in cases in which there is a large burst of data traffic to be sent to user equipment, result in an unnecessary exit for user equipment from a discontinuous reception cycle to a full Cell_DCH state, thus further decreasing possible power savings.

The first aspect recognises that it is possible to specify an algorithm to dynamically adapt the parameters of a discontinuous regime to actual traffic profiles so as to optimise a discontinuous reception regime, for example, eDRX operation at user equipment. An optimised algorithm may be operable to reconfigure each user equipment to change its DRx cycle dynamically, although such a full change of regime may be very slow as a result of signalling and decisions to be made within a network. Such delays may limit the feasibility of such a full change algorithm to cope with bursty traffic for which arrival rate is very difficult to predict precisely.

The first aspect recognises that rather than fully changing a discontinuous mode of operation, it is possible to adapt parameters of a discontinuous mode of operation, thus resulting in a dynamic, flexible and adaptive discontinuous regime, which can operate more effectively in relation to actual data transfer time required and/or actual traffic pattern. Such adaptation of existing parameters may enhance discontinuous user equipment operation, for example, eDRX, and may result in a saving to smartphone battery life.

Furthermore, the first aspect recognises that an assessment can be made of a level of data traffic being experienced, for example, at a base station, intended for particular user equipment. The base station may also be able to make an assessment as to whether the power saving mode being implemented is able to cope efficiently with the assessed data traffic. It may be, for example, that the data traffic to be sent to user equipment is low, and that the full "on" time of the next scheduled first state is not required to effectively complete data traffic transfer. Alternatively, it may be determined that more than the full "on" time of the next scheduled first state is required to effectively complete data traffic transfer. Depending on the assessment of known factors, the power saving regime may be adjusted accordingly.

Although embodiments describe user equipment operating in CELL_FACH state (eDRx), techniques described herein can be used in other network modes of operation which are able to implement discontinuous reception or transmission modes.

In order to enhance discontinuous regime performance, a flexible dynamic scheme is proposed. Such a scheme may comprise implementation of one or more flexible discontinuous mode parameters to adapt an existing static discontinuous mode. For example, a scheme may operate to adapt parameters and implement flexible Rx Burst, and/or flexible DRX Cycle.

In one embodiment, the method comprises the step of preventing full initialisation of a power saving mode according to a second predetermined scheme to replace the first predetermined scheme. Accordingly, full reconfiguration of communication between user equipment and a network can be avoided, that process being costly in terms of time, and not suited to the nature of bursty data traffic.

In one embodiment, the method comprises the step of preventing the user equipment exiting the power saving mode to enter a mode in which data packets may be communicated between the user equipment and the network at any time. Accordingly, entry to full Cell_DCH mode may be avoided for bursty traffic, if it is determined that a power saving mode can be adjusted to accommodate a level of expected bursty data traffic. Such an arrangement may allow entry to a more power hungry state to be avoided.

In one embodiment, the operational parameter comprises an indication of a period for which the user equipment is in the first state. In one embodiment, the adjustment to the operational parameter comprises an increase to the period for which the user equipment is in the first state. In one embodiment, the adjustment to the operational parameter comprises a decrease to the period for which the user equipment is in the first state. Accordingly, it will be appreciated that data traffic may be more efficiently communicated within a network operating in a discontinuous mode if the "on" period can be dynamically increased or decreased in response to a determined data traffic level. Increasing "on" time allows larger data packets to be sent, and a greater transfer of data traffic within the network.

In one embodiment, the operational parameter comprises an indication of a period for which the user equipment is in the second state. In one embodiment, the adjustment comprises an increase to the period for which the user equipment is in the second state. In one embodiment, the adjustment comprises a decrease to the period for which the user equipment is in the second state. Accordingly, it will be appreciated that increasing or decreasing the time between "on" periods can serve as a means to more efficiently handle bursty data traffic whilst still allowing for power saving, since a network node, for example, user equipment, may still sleep for a proportion of the time.

In one embodiment, the step of adjusting comprises the step of transmitting an indication of an adjustment to be made to the at least one operational parameter of the first predetermined scheme to the user equipment. Accordingly, it will be appreciated that a decision regarding adjustment may be made by, for example, an RNC or Base station within a network, that entity typically having better visibility of data traffic scheduled to be communicated within a network, and that entity may then transmit the determined adjustments or adaptations to the power saving mode to user equipment for implementation.

In one embodiment, the adjustment is temporary. Accordingly, any instructed adjustment may be for a limited number of cycles of the first predetermined power saving scheme before returning to operation according to that first predetermined power saving scheme. Time limited adjustment allows the scheme to be dynamically adjusted and responsive to changes in determined data traffic levels. In one embodiment, the steps of the first aspect are periodically repeated.

A second aspect provides a computer program product operable, when executed on a computer, to perform the method of any embodiment of the first aspect.

A third aspect provides a base station operable to adjust a power saving mode of user equipment operating in a wireless communication network, the power saving mode comprising a discontinuous reception and/or transmission mode according to which the user equipment periodically switches, according to a first predetermined scheme, between a first state in which data packets may be communicated between the user equipment and the network and a second state in which data packets cannot be communicated between the user equipment and the network,

the base station comprising:
determination logic operable to determine that there is data traffic to be communicated between the user equipment and the network;
assessment logic operable to assess whether the data traffic can be communicated within the first predetermined scheme in accordance with at least one predetermined efficiency target; and
adjustment logic operable to adjust at least one operational parameter of the first predetermined scheme to move communication of the data traffic between the user equipment and the network towards the at least one predetermined efficiency target if the assessment logic assesses that the data traffic cannot be communicated within the first predetermined scheme in accordance with the at least one predetermined efficiency target. It will be appreciated that other decision capable network nodes, for example, an RNC, eNodeB, Smart User equipment, femto base stations and the like may be arranged to provide similar results and to perform the method of the first aspect.

In one embodiment, the base station is operable to prevent full initialisation of a power saving mode according to a second predetermined scheme to replace the first predetermined scheme.

In one embodiment, the base station is operable to prevent the user equipment exiting the power saving mode to enter a mode in which data packets may be communicated between the user equipment and the network at any time.

In one embodiment, the operational parameter comprises an indication of a period for which the user equipment is in the first state. In one embodiment, the adjustment to the operational parameter comprises an increase to the period for which the user equipment is in the first state. In one embodiment, the adjustment to the operational parameter comprises a decrease to the period for which the user equipment is in the first state.

In one embodiment, the operational parameter comprises an indication of a period for which the user equipment is in the second state. In one embodiment, the adjustment comprises an increase to the period for which the user equipment is in the second state. In one embodiment, the adjustment comprises a decrease to the period for which the user equipment is in the second state.

In one embodiment, the base station further comprises transmission logic operable to transmit an indication of an adjustment to be made to the at least one operational parameter of the first predetermined scheme to the user equipment.

In one embodiment, the adjustment is temporary.

A fourth aspect provides a method of adjusting a power saving mode of user equipment operating in a wireless communication network, the power saving mode comprising a discontinuous reception and/or transmission mode according to which the user equipment periodically switches, according to a first predetermined scheme, between a first state in which data packets may be communicated between the user equipment and the network and a second state in which data packets cannot be communicated between the user equipment and the network, the method comprising the steps of:
receiving an indication of a change to at least one operational parameter of the first predetermined scheme, and
adjusting at least one operational parameter of the first predetermined scheme in accordance with the indication of change to move communication of the data traffic between the user equipment and the network towards at least one predetermined efficiency target.

A fifth aspect provides a computer program product operable, when executed on a computer, to perform any embodiment of the fourth aspect.

A sixth aspect provides user equipment operable to adjust its a power saving mode, the user equipment being operable to communicate within a wireless communication network, the power saving mode comprising a discontinuous reception and/or transmission mode according to which the user equipment periodically switches, according to a first predetermined scheme, between a first state in which data packets may be communicated between the user equipment and the network and a second state in which data packets cannot be communicated between the user equipment and the network, the user equipment comprising:
reception logic operable to receive an indication of a change to at least one operational parameter of the first predetermined scheme, and
adjustment logic operable to adjust at least one operational parameter of the first predetermined scheme in accordance with the indication of change to move communication of the data traffic between the user equipment and the network towards at least one predetermined efficiency target.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a wireless telecommunications network according to one embodiment;
Figure 2 illustrates a set of radio resource control states of user equipment suitable for use in the wireless telecommunications network of Figure 1; and
Figure 3 illustrates schematically examples of shortened and extended discontinuous regimes according to embodiments;
Figure 4 illustrates schematically an example of a skipped cycle discontinuous regime according to one embodiment;
Figure 5 illustrates schematically an example of a changed cycle discontinuous regime according to one embodiment;
Figure 6 illustrates schematically an example of a discontinuous regime employing flexible "on" period and flexible "time between on periods" according to one embodiment; and
Figure 7 illustrates an example of a discontinuous regime employing flexible "on" period and flexible "time between on periods" according to a further embodiment.

### DESCRIPTION OF THE EMBODIMENTS

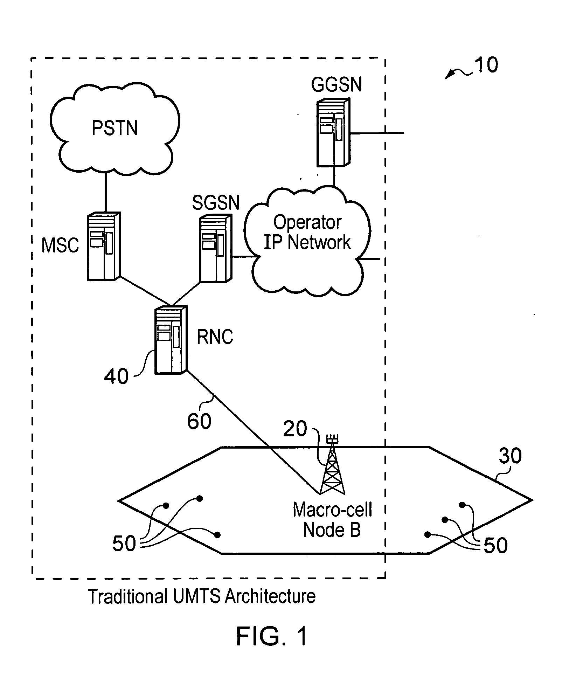

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provides and distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Each base station 20 has multiple antennas. It will be appreciated that Figure 1 illustrates a small subset of a total number of user equipment and base stations that may be present in a typically communications system.

The wireless communications system is managed by a radio network controller (RNC) 40. The radio network controller 40 controls operation of the wireless telecommunications system by communicating with a plurality of base stations over a backhaul communications link 60. The RNC also communicates with user equipment 50 via each base station and thus effectively manages a region of the entire wireless communications system.

User equipment communicates with base station 20 by transmitting data and information on channels known as "uplink" or "reverse" channels, and base station 20 communicates with user equipment 50 by transmitting data and information on radio channels known as "downlink" or "forward" channels.

In addition to "continuously on" operation, user equipment 50 may operate in a "discontinuous reception" (DRx) or "discontinuous transmission" (DTx) mode. Such modes allow user equipment 50 to save battery power when the UE is in an inactive period (for example, when user equipment is in an idle state).

During discontinuous reception user equipment 50 shuts down its reception antenna and periodically wakes up to receive possible data traffic and information, for example, paging messages, from wireless telecommunications network 10 via data sent on downlink channels to user equipment 50 from base station 20. If the messages received by user equipment 50 in the wake-up periods are deemed to exceed a threshold, or indicate that base station 20 wishes to send more information to user equipment 50, user equipment is typically operable to exit from the discontinuous reception mode.

Similarly, a discontinuous transmission (DTx) mode may be implemented by user equipment. In such a case, when in a substantially idle mode, user equipment shuts down its transmitter and only wakes up periodically to transmit packets of data to the network 10 via uplink channels to the base station 20.

In order to synchronise operation of user equipment 50 in a cell 30 served by a base station 20, the base station 20 has its own reference time frames, and indicates the system time frames to user equipment when they first connect. The reference time frames are not correlated between base stations. The correlation of reference time frames (in known wireless telecommunications systems, for example, UMTS and LTE architecture systems) is achieved by use of a system frame number. A system frame number (SFN) is used to identify the framing and timing of a cell served by a base station. System frame number cycles through a range of values from 0 to 4095 in UMTS and 0 to 1023 in LTE.

DTx and DRx cycles can be specified by reference to a SFN. Use of SFN to control discontinuous transmission or reception cycles in such known systems has led, given available cycles, to a maximum cycle length in a UMTS system of 4096 radio frames. Since one radio frame lasts 10ms, this means that the maximum cycle length for a UMTS network is 40.96 seconds.

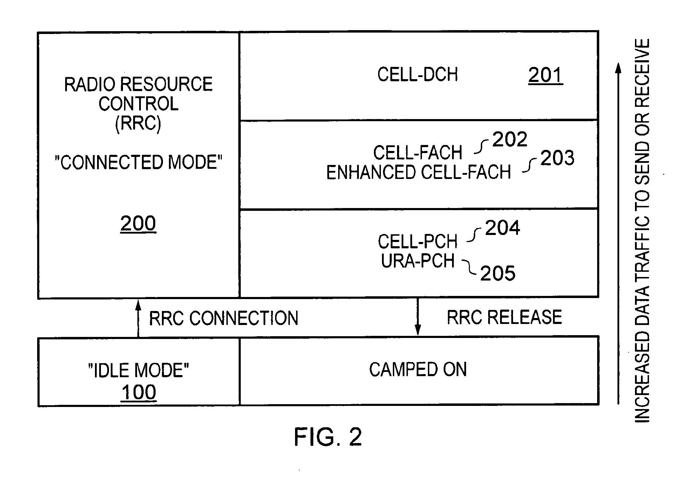

By way of background, Figure 2 illustrates schematically various radio states in which user equipment 50 may operate in a UMTS telecommunications network. On initial turning on of user equipment in a cell 30, it will typically be in "idle mode" 100. Once it synchronises and attaches itself to a base station 20, it gains a radio resource control (RRC) connection and is referred to as being in connected mode 200. User equipment in idle mode does not have a Radio Resource Control (RRC) connection.

If user equipment is RRC connected 200, it can be in one of five different RRC states: Cell_DCH (201), Cell_FACH (202), Enhanced Cell_FACH (203), Cell_PCH (204) and URA_PCH (205) states.

User equipment typically moves into Cell_DCH (201) state when its traffic is high, since in such a state the user equipment is allocated a dedicated channel on which to transmit and receive data from base station 20. In UMTS network architecture, user equipment can be in Cell_DCH state, where it is expected to have high volume of traffic.

Historically user equipment operated, when not in Cell_DCH state, using a Random Access Channel (RACH) on the uplink. Similarly, a base station would operate to communicate with user equipment using a Forward Access Channel (FACH). RACH and FACH have a very small data carrying ability and, in W-CDMA or UMTS systems, a capability for user equipment and base stations to operate and communicate data traffic therebetween using a shared or common resource on downlink and uplink when user equipment is in CELL_FACH state has been introduced (including, for example, the introduction of Enhanced CELL_FACH and EUL in CELL_FACH). In the uplink, data traffic transmission can occur using an Enhanced Dedicated Channel (EDCH) and in the downlink traffic can be sent using a High Speed Downlink Shared Channel (HS-DSCH). Those channels allow user equipment and base stations to communicate and transmit larger data packets between themselves, subject to a level of data traffic encountered, without the need for user equipment to enter a full Cell_DCH state. Such an arrangement allows user equipment to remain in the Cell_FACH state longer without transiting to a "more dedicated" state, thus allowing user equipment to achieve a power consumption saving.

Furthermore, it will be appreciated that the ability of user equipment to operate in a Discontinuous Transmission or Reception mode, as described above, whilst in a non-cell_DCH state (that is to say, whilst in a less dedicated state) further power consumption savings may be achieved by user equipment, whilst maintaining an ability to communicate data packets with the wireless communication network. For example, a HS-DSCH DRX (Discontinuous Receive) capability introduced for use by user equipment in CELL_FACH states allows user equipment to communicate with a base station and receive and transmit data packets whilst awake, but also to "sleep" between periods of data transmission and reception, thereby achieving operational power savings.

The deployment of these enhanced features to, for example, the Cell_FACH state of user equipment, can allow "always on" type services, for example, Push to talk over Cellular (PoC), push email and VPN connections, which typically transmit frequent but small packets between user equipment and a server, to be supported in CELL_FACH state without the need to enter a Cell_DCH state.

In a discontinuous reception mode implemented by user equipment, for example, eDRX (Enhanced HSDPA Discontinuous Reception in CELL_FACH state), a base station or RNC operates to instruct the user equipment regarding the parameters of the discontinuous reception mode to be implemented. The parameters which describe the nature of the reception pattern include, for example, an indication of a time period, or number of system frames, for which user equipment is to remain "on" and an indication of a time period between "on" periods. It will be appreciated that a discontinuous reception cycle may equally be specified in relation to an "off" period and a time delay between "off" periods.

In a typical discontinuous reception mode, the "Rx burst period" (indicative of "on" period) and "DRX cycle" (indicative of delay between "on" periods) are fixed, or static. That is to say, once user equipment has been instructed to enter a discontinuous reception mode, the nature of that discontinuous reception mode is essentially static and does not adapt to accommodate any actual data traffic which is to be communicated between a base station and the user equipment when the user equipment is "on". That is to say, a statically implemented discontinuous reception regime takes no account of either: actual data transfer time needed or dynamic traffic pattern. A static pattern may cause unwanted power waste, for example, user equipment may remain "on" for longer than required, thus resulting in a less satisfactory eDRX performance in relation to user equipment, for example, smartphone, battery life. Implementation of a fixed DRX cycle having, for example, a fixed Rx burst period may, in cases in which there is a large burst of data traffic to be sent to user equipment, result in an unnecessary exit for user equipment from a discontinuous reception cycle to a full Cell_DCH state, thus further decreasing possible power savings.

It is possible to specify an algorithm to dynamically adapt both "Rx burst period" and "HS-DSCH DRX cycle" to actual traffic profiles so as to optimise a discontinuous reception regime, for example, eDRX operation at user equipment. An optimised algorithm may be operable to reconfigure each user equipment to change its DRx cycle dynamically, but such a full change of regime may be very slow as a result of signalling and decisions to be made within a network. Such delays may limit the feasibility of such a full change algorithm to cope with bursty traffic for which arrival rate is very difficult to predict precisely.

Rather than fully changing the discontinuous mode of operation, it is possible to adapt parameters of a discontinuous mode of operation, for example, "Rx burst period" and/or "HS-DSCH DRX cycle" thus resulting in a dynamic, flexible and adaptive discontinuous regime, which can operate more effectively in relation to actual data transfer time required and/or actual traffic pattern. Such adaptation of existing parameters may enhance discontinuous user equipment operation, for example, eDRX, and may result in a saving to smartphone battery life.

Although embodiments describe user equipment operating in CELL_FACH state (eDRx), techniques described herein can be used in other network modes of operation which are able to implement discontinuous reception or transmission modes.

In order to enhance eDRx performance, a flexible dynamic eDRX scheme is proposed. Such a scheme may comprise implementation of one or more flexible discontinuous mode parameters to adapt an existing static discontinuous mode. For example, a scheme may operate to adapt parameters and implement flexible Rx Burst, and/or flexible DRX Cycle.

For example, a network may be operable to instruct a change to an Rx burst implemented by user equipment already in a discontinuous reception mode. The network (for example, an RNC via base station signalling, a smart base station directly) may be operable to instruct user equipment to operate to implement a shortened or extended burst period.

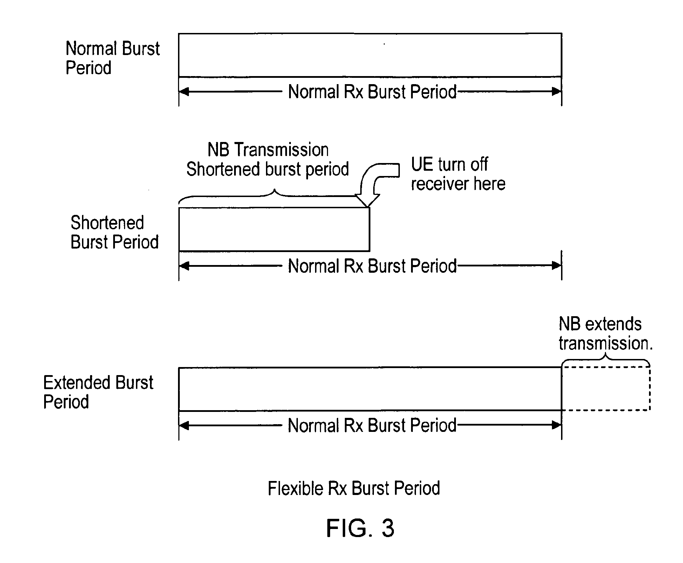

Figure 3 illustrates schematically examples of shortened and extended discontinuous regimes according to embodiments. In a shortened burst period, user equipment may, for example, be instructed to operate such that it turns off its receiver immediately after the network has finished a data transmission, even if the currently specified static Rx burst has not ended. In such an embodiment, the network is operable to indicate an end of transmission, and upon receipt of that indication, the user equipment may be operable to immediately turn off its receiver.

In some embodiments, user equipment may be operable to autonomously turn off its receiver once it believes all from the network has been received. In such an embodiment, a known protocol of data transfer between the network and user equipment may be required, for example, that the network will only send one burst of packets per Rx burst period. A shortened burst period is illustrated schematically in Figure 3.

In an extended burst period user equipment may, for example, be instructed to operate such that it extends the static or fixed Rx burst period. Here the NETWORK can further transmit data to the user equipment even after the normal Rx Burst period. In such an embodiment, the network is operable to indicate to user equipment that it should continue to turn on its receiver after the normal fixed Rx Burst Period. Furthermore, a network may be operable to instruct a change to a DRx cycle implemented by user equipment already in a discontinuous reception mode. The network (for example, an RNC via base station signalling, a smart base station directly) may be operable to instruct user equipment to operate to implement a skipped or modified discontinuous cycle period.

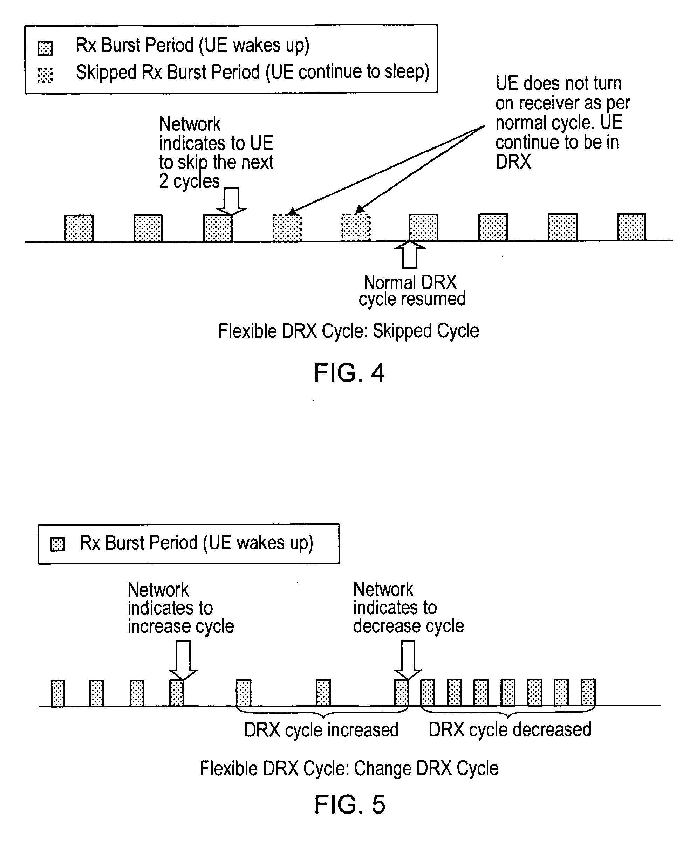

Figure 4 illustrates schematically an example of a skipped cycle discontinuous regime according to one embodiment. In some embodiments a flexible discontinuous cycle period is implemented. If implementing a skipped cycle, the network is operable to indicate to UE that one or more scheduled "wake up" instances may be missed or skipped. That is to say, user equipment is instructed to skip the next M (M>0) wake-up (i.e. Rx burst) periods in the fixed normal DRx cycle. In some embodiments, M may be a fraction, with the result that only a fraction of the next fixed cycle Rx burst period is skipped.

Figure 5 illustrates schematically an example of a changed cycle discontinuous regime according to one embodiment. In some embodiments, a changed DRx cycle may be implemented. In such embodiments, the network can transmit an indication to user equipment to increase or decrease its fixed DRx cycle by N times (*N*>1, for example, 2, that is to say, to halve, or double, the cycle period of the existing fixed discontinuous regime cycle.

It will be appreciated that combinations of changed discontinuous regime parameters may be implemented to achieve most efficient overall network, or user equipment, operation. That is to say, for example, flexible Rx Burst Period and Flexible DRX Cycle can be either combined or work separately according to various embodiments.

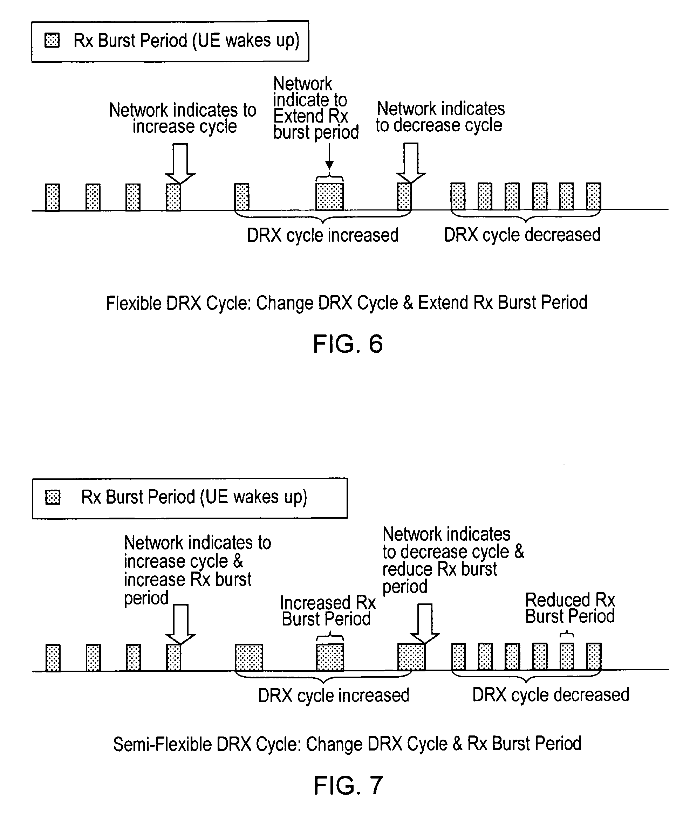

Figure 6 illustrates schematically an example of a discontinuous regime employing flexible "on" period and flexible "time between on periods" according to one embodiment. In the example illustrated in Figure 6 the network is operable to instruct user equipment to increase both the DRx Cycle, that is to say, increase the time between on periods, and also to increase the Rx Burst Period, that is to say, the time the user equipment is in an "on" state.

Figure 7 illustrates an example of a discontinuous regime employing flexible "on" period and flexible "time between on periods" according to a further embodiment. A semi-flexible scheme can be implemented such that the network can indicate a change in DRx cycle and also a change to a normal, fixed, Rx burst period.

It will be appreciated that in order to implement a modified flexible discontinuous regime, user equipment will require some indication of the scheme that is to be followed. Indicators from the are required to adapt the Rx Burst Period and DRX cycle to more closely match an actual data traffic pattern.

In order to keep additional network signalling burden in relation to such a new regime to a minimum, it will be appreciated that a single bit may be required to implement a change to an "on period" in a discontinuous regime, and that two bits may be required to implement a change to the cycle period between adjacent "on periods". That is to say, a fully flexible scheme employing both a change to "on period" and cycle time between on periods may, in some embodiments, require only three bits of signalling. Signalling requirements are described in greater detail below:

### Introduction of a new signalling bit "A" for adapting Rx burst period:

According to one embodiment, the network, for example, RNC or NodeB (base station) may be operable to notify user equipment whether the current normal (i.e. fixed, or static) Rx burst period or flexible (i.e. shortened/extended) burst period is to be used. The network may also be operable to indicate to user equipment whether a current data traffic transmission is finished by the use of appropriate signalling (for example, dedicated RRC signalling or signalling such as a spare field in MAC-ehs PDU header/tailer or AGCH/RGCH or HS-SCCH).

According to one example, a single bit is needed for such purpose:
Absence of a bit: indicates to user equipment that it is to use the predetermined (static or fixed) burst period of the pre-implemented discontinuous regime.
Receipt of a bit (0/1) indicates to user equipment that a flexible burst period is to be implemented. According to one example:
   0: may indicate that the current data transmission is ongoing and not finished yet, as a result, the user equipment shall continue to receive and may not return to a sleep state.
   1: may indicate to the user equipment that the current data transmission is finished and the user equipment is to immediately stop reception, and return to a sleep state.

Such a signalling regime may be used as follows: when the network wants the user equipment to use the normal (fixed) burst period of an existing discontinuous regime, it leaves this bit A absent; when the network wants user equipment to stop reception earlier (that is to say, it wishes to implement a shortened "on" period), it sets bit A to 1 in signalling; when the network wants user equipment to prolong its reception (that is to say, it wishes to implement an extended "on" period) beyond the normal Rx burst period, it sets bit A to 0 before the end of current Rx burst period. In some embodiments, the network, or base station is operable such that once it finishes all pending data transmission to the user equipment, it sets bit A to 1 to signal the current transmission/extended period is finished.

### Introduction of a new 2-bit signal B for adapting DRX cycle:

According to one embodiment, the network, for example, RNC or NodeB (base station) may be operable to notify user equipment whether the current DRx cycle is to be used or whether the next M DRx bursts (with current DRX cycle) shall be skipped or a new DRX cycle shall be employed by the use of appropriate signalling (for example, dedicated RRC signalling or signalling such as a spare field in MAC-ehs PDU header/tailer or AGCH/RGCH or HS-SCCH).

According to one example, two bits are needed for such purpose:
Absence of a bit: indicates to user equipment that it is to use the predetermined (static or fixed) cycle (time between "on" periods) of the pre-implemented discontinuous regime. According to one embodiment:
   0: may indicate to user equipment that it is to skip the next M Rx burst periods in a row
   1: may indicate to user equipment that it is to use a new "increased" DRx cycle (new DRX cycle = current DRX cycle * *N*)
   2: may indicate to user equipment that it is to use a new "decreased" DRx cycle (new DRX cycle = current DRX cycle / *N*)
   3: reserved

According to such embodiments: M > 0 and can be a fraction (i.e. fraction of frame is skipped). According to some embodiments, both the M (cycle to skip) and N (times to scale) the new DRX cycle can be signalled to user equipment prior to DRx cycle operation. In alternative embodiments, a pre-configured default value may be used. According to further embodiments, additional signalling may be used. It will be appreciated that use of further signalling in modifying the discontinuous regime may be wasteful of resource.

According to some embodiments, a change in DRX cycle length can be a toggle between cycle X1 and X2, (for example, user equipment may start with cycle X1 and if indicated will change to cycle X2. If it is in cycle X2 it can change back to cycle X1 when indicated). According to such an embodiment, a simple binary signal like a pulse is sufficient and the same bit used to indicate skipped of cycles may, for example, be used. In such an embodiment, case only a single bit is required.

It will be appreciated that allowing for a greater number of signalling bits would allow for greater flexibility in terms of implementation of flexible Rx burst period and DRX cycle. For example, if more than 2 bits are used to indicate the flexible DRX cycle, the extra bits can be used to indicate to user equipment to skip L OR M frames (for example, 1 = L frames, 0 = M frames) or to indicate an increase in DRx cycle length by a range of values (e.g. 0.25, 0.5, 2, 4, etc). Such extra flexibility comes at the cost of extra signalling overhead.

It will be appreciated that there are benefits associated with implementing a flexible discontinuous regime. In the case of user equipment implementing a flexible DRx regime: user equipment may increase its overall sleep time thereby increasing battery saving; Rx burst period can be flexible and adapt to the actual downlink data transfer time needed (to allow both transmission and re-transmission), thus allowing power savings and reducing data traffic latency caused by DRx (in the cases where according to a fixed regime transmission is interrupted and limited by the fixed wake-up period); the DRx cycle can be adapted to downlink traffic. Rather than waking up the user equipment (i.e. exiting DRx), the network may be operable to change the parameters of a user equipment discontinuous regime cycle to fit the data traffic. Such arrangements may offer a better tradeoff between smartphone battery saving and service response (latency) whilst still maintaining DRx.

In summary, a flexible eDRX scheme may enhance power saving performance for new smartphones, thus offering better operator service and better customer experience.

The proposal enables more intelligent network operation in the area of smartphone battery life saving.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of adjusting a power saving mode of user equipment operating in a wireless communication network, said power saving mode comprising a discontinuous reception and/or transmission mode according to which said user equipment periodically switches, according to a first predetermined scheme, between a first state in which data packets may be communicated between said user equipment and said network and a second state in which data packets cannot be communicated between said user equipment and said network,
said method comprising:
determining that there is data traffic to be communicated between said user equipment and said network;
assessing whether said data traffic can be communicated within said first predetermined scheme in accordance with at least one predetermined efficiency target; and if not:
adjusting at least one operational parameter of said first predetermined scheme to move communication of said data traffic between said user equipment and said network towards said at least one predetermined efficiency target.

2. A method according to claim 1, comprising the step of: preventing full initialisation of a power saving mode according to a second predetermined scheme to replace said first predetermined scheme.

3. A method according to claim 1 or claim 2, comprising the step of: preventing said user equipment exiting said power saving mode to enter a mode in which data packets may be communicated between said user equipment and said network at any time.

4. A method according to any preceding claim, wherein said operational parameter comprises an indication of a period for which said user equipment is in said first state.

5. A method according to claim 4, wherein said adjustment to said operational parameter comprises an increase to said period for which said user equipment is in said first state.

6. A method according to claim 4, wherein said adjustment to said operational parameter comprises a decrease to said period for which said user equipment is in said first state.

7. A method according to any preceding claim, wherein said operational parameter comprises an indication of a period for which said user equipment is in said second state.

8. A method according to claim 7, wherein said adjustment comprises an increase to said period for which said user equipment is in said second state.

9. A method according to claim 7, wherein said adjustment comprises a decrease to said period for which said user equipment is in said second state.

10. A method according to any preceding claim, wherein said step of adjusting comprises the step of transmitting an indication of an adjustment to be made to said at least one operational parameter of said first predetermined scheme to said user equipment.

11. A method according to any preceding claim, wherein said adjustment is temporary.

12. A computer program product operable, when executed on a computer, to perform the method of any one of claims 1 to 11.

13. A base station operable to adjust a power saving mode of user equipment operating in a wireless communication network, said power saving mode comprising a discontinuous reception and/or transmission mode according to which said user equipment periodically switches, according to a first predetermined scheme, between a first state in which data packets may be communicated between said user equipment and said network and a second state in which data packets cannot be communicated between said user equipment and said network,
said base station comprising:
determination logic operable to determine that there is data traffic to be communicated between said user equipment and said network;
assessment logic operable to assess whether said data traffic can be communicated within said first predetermined scheme in accordance with at least one predetermined efficiency target; and
adjustment logic operable to adjust at least one operational parameter of said first predetermined scheme to move communication of said data traffic between said user equipment and said network towards said at least one predetermined efficiency target if said assessment logic assesses that said data traffic cannot be communicated within said first predetermined scheme in accordance with at least one predetermined efficiency target.

14. A method of adjusting a power saving mode of user equipment operating in a wireless communication network, said power saving mode comprising a discontinuous reception and/or transmission mode according to which said user equipment periodically switches, according to a first predetermined scheme, between a first state in which data packets may be communicated between said user equipment and said network and a second state in which data packets cannot be communicated between said user equipment and said network,
said method comprising:
receiving an indication of a change to at least one operational parameter of said first predetermined scheme, and
adjusting at least one operational parameter of said first predetermined scheme in accordance with said indication of change to move communication of said data traffic between said user equipment and said network towards at least one predetermined efficiency target.

15. User equipment operable to adjust its a power saving mode, said user equipment being operable within a wireless communication network, said power saving mode comprising a discontinuous reception and/or transmission mode according to which said user equipment periodically switches, according to a first predetermined scheme, between a first state in which data packets may be communicated between said user equipment and said network and a second state in which data packets cannot be communicated between said user equipment and said network,
said user equipment comprising:
reception logic operable to receive an indication of a change to at least one operational parameter of said first predetermined scheme, and
adjustment logic operable to adjust at least one operational parameter of said first predetermined scheme in accordance with said indication of change to move communication of said data traffic between said user equipment and said network towards said at least one predetermined efficiency target.
